# EUROPEAN PATENT APPLICATION

(11) **EP 4 718 656 A1**
(43) Date of publication of application: **01.04.2026**
(21) Application number: 24203303.3
(22) Date of filing: 27.09.2024
(51) Int. Cl.: H02J 1/10, H02J 3/38

(54) **A CONTROL UNIT AND A METHOD FOR MANAGING POWER SOURCES AND ENERGY STORAGE IN A HYBRID POWER GENERATION SYSTEM**

(71) Applicant: Volvo Penta Corporation, 405 08 Göteborg (SE)
(72) Inventor: LANDBERG, Patrik, 414 76 Göteborg (SE)
(74) Representative: Zacco Sweden AB

(57) **Abstract**

A control unit for managing power sources and energy storage in a hybrid power generation system, wherein the hybrid power generation system is configured to meet a power demand of one or more electrical loads, and comprises a primary power source comprising one or more fuel cells configured to convert hydrogen to electrical power, a secondary power source comprising a combustion engine and a generator configured to generate to convert fuel into electrical power, and an energy storage system configured to support the primary and secondary power sources, and wherein the control unit is configured to monitor the power demand of the one or more electrical loads, and upon detecting a spike in the power demand, connect the energy storage system to support at least one of the primary and secondary power sources.

## Description

### TECHNICAL FIELD

The disclosure relates generally to power generation systems. In particular aspects, the disclosure relates to a control unit and a method for managing power sources and energy storage in a hybrid power generation system. The disclosure can be applied to any hybrid power generation system, but may also be applied to vehicles, vessels, and machinery that utilize hybrid power generation systems. Although the disclosure may be described with respect to a power generation system, the disclosure is not restricted to any particular power generation system.

### BACKGROUND

Fuel cells are recognized for their efficiency in converting hydrogen into electrical power, making them suitable for continuous, steady-state applications in power generation systems. However, their slower response to rapid changes in power demand requires additional systems to manage transient loads effectively. Batteries typically fulfill this role due to their quick response to sudden fluctuations. However, relying solely on batteries to handle variable loads would necessitate a large energy storage capacity, which adds complexity and cost. Additionally, batteries degrade over charge cycles, leading to a shorter lifespan and increased costs for replacement.

Hence, there is a need for improved fuel cell based power generation systems that can address rapid changes in power demand without solely relying on costly battery systems. Such systems should significantly reduce energy storage requirements while maintaining performance and efficiency.

### SUMMARY

According to a first aspect of the disclosure, a control unit for managing power sources and energy storage systems in a hybrid power generation system is disclosed. The hybrid power generation system is configured to meet a power demand of one or more electrical loads, and comprises: a primary power source comprising one or more fuel cells and an inverter, wherein the one or more fuel cells are configured to convert hydrogen to electrical power, and the inverter is configured to convert the DC output of the one or more fuel cells to AC; a secondary power source comprising a combustion engine and a generator, wherein the engine is configured to generate rotational power from fuel, and the generator is configured to convert the rotational power into electrical power; and an energy storage system configured to support the primary and secondary power sources. The control unit is configured to monitor the power demand of the one or more electrical loads, and upon detecting a spike in the power demand, connect the energy storage system to support at least one of the primary and secondary power sources. The first aspect of the disclosure aims to provide a control unit that can effectively manage rapid changes in power demand in a cost-efficient manner. A technical benefit may include significantly reduced energy storage requirements, as the energy storage system only needs to support the primary and secondary power sources during spikes in power demand and can be disconnected once the secondary power source 130 has reached adequate engine power output.

Optionally in some examples, including in at least one preferred example, the control unit is configured to segment the power demand into a base load and a variable load, and control the electrical power output of the primary and secondary power sources such that the primary power source supplies electrical power to meet the base load, and the secondary power source supplies electrical power to meet variable load. A technical benefit may include the ability to leverage the high efficiency of the fuel cell during steady-state operation, while the combustion engine efficiently addresses variable loads.

Optionally in some examples, including in at least one preferred example, the control unit 110 is configured to adjust the base load by evaluating the power demand over a specified time interval. A technical benefit may include the ability to optimize load distribution between the fuel cell and the combustion engine, thereby enhancing overall system efficiency and performance.

Optionally in some examples, including in at least one preferred example, monitoring power demand comprises monitoring rotational speed of the combustion engine 131 and detecting a spike in power demand comprises detecting the rotational speed dropping below a predefined threshold. A technical benefit may include the ability to quickly detect spikes in power demand that exceed the capacity of the power sources, enabling immediate connection of the energy storage system to support the primary and secondary power sources.

Optionally in some examples, including in at least one preferred example, connecting the energy storage system to the primary power source comprises connecting the energy storage system in parallel to the DC output of the primary power source 120. A technical benefit may include an immediate effect of the energy storage system in raising the DC output power, thereby increasing the overall output power of the hybrid power generation system.

Optionally in some examples, including in at least one preferred example, the combustion engine further comprises an electrically assisted boosting device, configured to enhance engine power by supplying compressed air to the engine, and wherein connecting to energy storage system to the secondary power source comprises connecting the energy storage system to the assisted bosting device. A technical benefit may include improved responsiveness of the secondary power source, as the energy storage system provides power to boost engine performance.

Optionally in some examples, including in at least one preferred example, the control unit is further configured to control the charging of the energy storage system by connecting the energy storage system as a load to the primary and secondary power sources. A technical benefit may include integrating charging of the energy storage system as part of the overall management of the power sources.

Optionally in some examples, including in at least one preferred example, the energy storage system comprises a supercapacitor. A technical benefit may include reduced degradation from charge and discharge cycles, resulting in a longer lifecycle compared to conventional rechargeable battery systems.

According to a second aspect of the disclosure, a hybrid power generation system is disclosed. The hybrid power generation system is configured to meet a power demand of one or more electrical loads, and comprises: a primary power source comprising one or more fuel cells and an inverter, wherein the one or more fuel cells are configured to convert hydrogen to electrical power, and the inverter is configured to convert the DC output of the one or more fuel cells to AC; a secondary power source comprising a combustion engine and a generator, wherein the engine is configured to generate rotational power from fuel, and the generator is configured to convert the rotational power into electrical power; an energy storage system configured to support the primary and secondary power sources; and a control unit according to any of the examples of the first aspect of the disclosure. The second aspect of the disclosure may seek to provide a power generation system that can effectively address rapid changes in power demand in a cost-efficient manner. A technical benefit may include significantly reduced energy storage requirements, as the energy storage system only needs to support the primary and secondary power sources during spikes in power demand and can be disconnected once the secondary power source has reached adequate engine power output.

Optionally in some examples, including in at least one preferred example, wherein the fuel of the combustion engine is methanol and wherein the hybrid power generation system further comprises a methanol reformer configured to reform methanol into hydrogen to supply the fuel cell system. A technical benefit may include improved fuel handling, as both primary and secondary power sources utilize the same fuel.

According to a third aspect of the disclosure, a method for managing power sources and energy storage in a hybrid power generation system is disclosed. The hybrid power generation system is configured to meet a power demand of one or more electrical loads, and comprises a primary power source comprising one or more fuel cells and an inverter, wherein the one or more fuel cells are configured to convert hydrogen to electrical power, and the inverter is configured to convert the DC output of the one or more fuel cells to AC; a secondary power source comprising a combustion engine and a generator, wherein the engine is configured to generate rotational power from fuel, and the generator is configured to convert the rotational power into electrical power; and an energy storage system configured to support the primary and secondary power sources. The method comprises monitoring power demand of the one or more electrical loads, detecting a spike in the power demand, and connecting, in response to detecting the spike in the power demand, the energy storage system to support at least one of the primary and secondary power sources. The third aspect of the disclosure may seek to provide a method that can effectively address rapid changes in power demand in a cost-efficient manner. A technical benefit may include significantly reduced energy storage requirements, as the energy storage system only needs to support the primary and secondary power sources during spikes in power demand and can be disconnected once the secondary power source has reached adequate engine power output.

Optionally in some examples, including in at least one preferred example, the method further comprises segmenting the power demand into a base load and a variable load, and controlling the electrical power output of the primary and secondary power sources such that the primary power source supplies electrical power to meet the base load, and the secondary power source supplies electrical power to meet variable load. A technical benefit may include the ability to leverage the high efficiency of the fuel cell during steady-state operation, while the combustion engine efficiently addresses variable loads.

Optionally in some examples, including in at least one preferred example, segmenting may further comprise adjusting the base load by evaluating the power demand over a specified time interval. A technical benefit may include the ability to optimize load distribution between the fuel cell and the combustion engine, thereby enhancing overall system efficiency and performance.

Optionally in some examples, including in at least one preferred example, monitoring comprises monitoring rotational speed of the combustion engine and wherein detecting a spike in power demand comprises detecting the rotational speed dropping below a predefined threshold. A technical benefit may include the ability to quickly detect spikes that exceed the capacity of the power sources, enabling immediate connection of the energy storage system to support the primary and secondary power sources.

Optionally in some examples, including in at least one preferred example, connecting the energy storage system to the primary power source comprises connecting the energy storage system in parallel to the DC output of the primary power source. A technical benefit may include an immediate effect of the energy storage system in raising the DC output power, thereby increasing the overall output power of the hybrid power generation system.

Optionally in some examples, including in at least one preferred example, the combustion engine comprises an electrically assisted boosting device, configured to enhance engine power by supplying compressed air to the engine, and wherein connecting the energy storage system to the secondary power source comprises connecting the energy storage system to the assisted bosting device. A technical benefit may include improved responsiveness of the secondary power source, as the energy storage system provides power to boost engine performance.

Optionally in some examples, including in at least one preferred example, the method further comprises charging the energy storage system by connecting the energy storage system as a load to the primary and secondary power sources and increase the output power of the secondary power source accordingly. A technical benefit may include integrating charging of the energy storage system as part of the overall management of the power sources.

Optionally in some examples, including in at least one preferred example, the energy storage system comprises a supercapacitor. A technical benefit may include reduced degradation from charge and discharge cycles, resulting in a longer lifecycle compared to conventional rechargeable battery systems.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
FIG. 1 illustrates a hybrid power generation system comprising a primary power source equipped with one or more fuel cells configured to convert hydrogen to electrical power; a secondary power source comprising a combustion engine and a generator, an energy storage system, and a control unit, according to an example.
FIG. 2 illustrates the hybrid power generation system wherein the combustion engine further comprises an electrically assisted boosting device, according to an example.
FIG. 3 is a flowchart of a method for monitoring and managing power supply sources and energy storage in a hybrid power generation system, according to an example.
FIG. 4A schematically illustrates a control unit.
FIG. 4B shows an example of a computer program product.
FIG. 5 is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

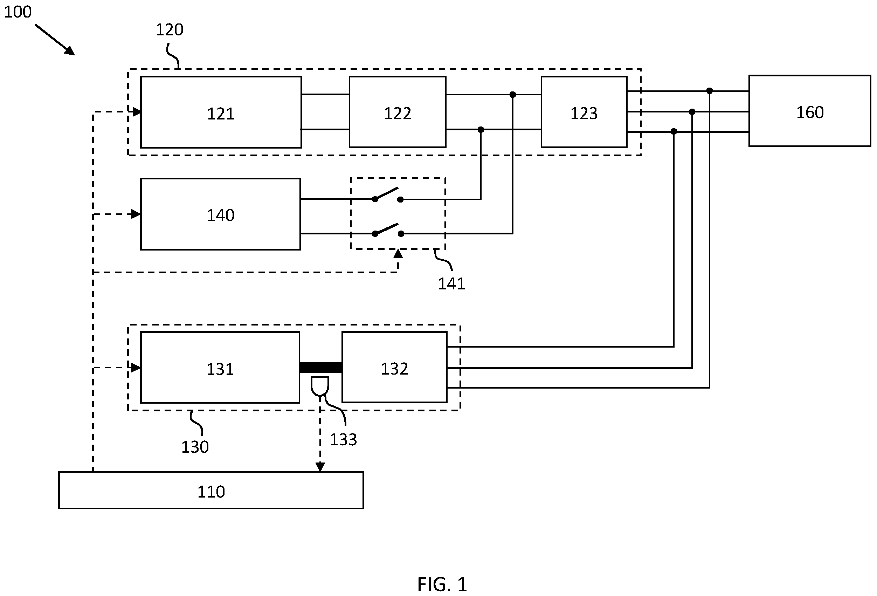

FIGS. 1-2 illustrate a first aspect of the disclosure relating to a control unit 110 for managing power sources and an energy storage system in a hybrid power generation system 100. FIG. 1 illustrates the hybrid power generation system 100 comprising the control unit 110, a primary power source 120, a secondary power source 130, and an energy storage system 140 configured to support the primary and secondary power sources 120, 130. The hybrid power generation system 100 is configured to meet a power demand of one or more connected electrical loads 160.

The control unit 110 is configured to monitor the power demand of the one or more electrical loads 160, and upon detecting a spike in the power demand, connect the energy storage system 140 to support at least one of the primary and secondary power sources 120, 130. An advantage of this approach is that storage requirements of the energy storage system 140 can be significantly reduced, as the energy storage system only needs to support the primary and secondary power sources during spikes in power demand and can be disconnected as soon as the secondary power source 130 has reached adequate power output.

The primary power source comprises one or more fuel cells 121 and an inverter 123. The one or more fuel cells are configured to convert hydrogen, through a reaction with oxygen, into electrical power. The one or more fuel cells generate a DC output, thus an inverter 123 is configured to convert the DC output to AC to provide AC power to the one or more electrical loads connected to the hybrid power generation system 100. In some examples, a DC-to-DC converter 122 may be needed to convert the DC output of the one or more fuel cells 121 to a standard voltage that is compatible with the energy storage system 140. The output power of the one or more fuel cells 121 will typically be managed by the control unit, which may send instructions to increase or decrease output power.

The secondary power source 130 comprises a combustion engine 131 and a generator 132. The combustion engine is configured to generate rotational power from a fuel, and the generator 132 is configured to convert the rotational power into electrical power. The fuel may be diesel, gasoline, methanol, ethanol, natural gas, hydrogen, or any type of fuel suitable for use in combustion engines. The AC output of the generator is connected to the AC output of the inverter 123. Both the generator 132 and the inverter 123 are configured to maintain the same output voltage and to ensure phase synchronization. In a power generation scenario, the combustion engine 131 is usually controlled to maintain constant speed and frequency. Consequently, if power demand exceeds output, engine speed drops, prompting the engine to increase power to recover speed.

In some examples, the control unit 110 is configured to segment the power demand into a base load and a variable load and control the electrical power output of the primary and secondary power sources 120, 130 such that the primary power source 120 supplies electrical power to meet the base load, and the secondary power source 130 supplies electrical power to meet variable load. The base load reflects a stable power demand that is compatible with the steady-state operation of the one or more fuel cells 121. Typically, the base load remains constant, however, the control unit 110 may adjust it as the power demand of the one or more electrical loads 160 changes. For instance, the control unit 110 can evaluate power demand over a designated time period to establish an appropriate base load. In one example, the base load may correspond to the minimum power demand observed during that specified interval.

As mentioned above, the control unit 110 is configured to monitor the power demand of the one or more electrical loads 160, and upon detecting a spike in the power demand, connect the energy storage system 140 to support at least one of the primary and secondary power sources 120, 130. To monitor the power demand, the control unit 110 may be configured to monitor the rotational speed of the combustion engine 131. This rotational speed may be obtained from a rotational speed sensor 133 that is configured to measure rotational speed of the coupling (or shaft) connecting the combustion engine 131 to the generator 132. Detecting a spike in power demand may involve detecting a drop in rotational speed, such as when the rotational speed falls below a predefined threshold. This drop indicates that the combustion engine is struggling to meet power demand, thus offering an efficient and rapid method for detecting spikes in demand that exceed the capacity of the power sources 120, 130. The predefined threshold may be determined through calibration of the hybrid power generation system or by testing other systems utilizing the same type of combustion engine and energy storage system.

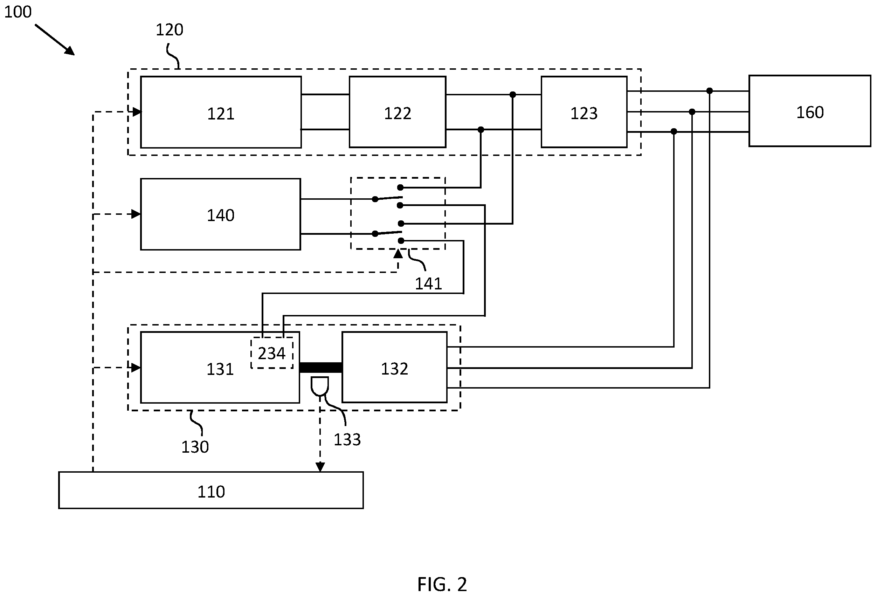

In some examples, and illustrated in the example of FIG. 1, connecting the energy storage system 140 to support at least one of the primary and the secondary power sources 120 may comprise connecting the energy storage system 140 in parallel to the DC output of the primary power source 120. A technical benefit may include an immediate effect of the energy storage system 140 in raising the DC output power, thereby increasing the overall output power of the hybrid power generation system. Alternatively, and illustrated in the example of FIG. 2, the combustion engine 131 further comprises an electrically assisted boosting device 234, configured to enhance engine power by supplying compressed air to the engine. Connecting to energy storage system 140 to at least one of the primary and the secondary power sources 120 may then comprise connecting the energy storage system 140 to the assisted bosting device 234. As the energy storage system 140 provides power, the assisted bosting device 234 will improve the responsiveness of the secondary power source by boosting engine performance. The assisted bosting device 234 may, for example, be an e-turbocharger or an e-supercharger, which are known to swiftly enhance engine performance and efficiency.

The energy storage system 140 configured to support the primary and secondary power sources 120, 130. A switch 141 controlled by the control unit 110 may connect/disconnect the energy storage system with the DC output of the fuel cells 121, which allows the energy storage system to support the primary and secondary power sources 120, 130 with additional power. As mentioned previously, a DC-to-DC converter 122 may often be needed to ensure that the DC output of the one or more fuel cells 121 and the energy storage system voltage have the same voltage. The energy storage system 140 may also be charged by connecting it as a load to the DC output of the fuel cells 121. Alternatively, charging can be achieved by connecting the energy storage system 140 to the AC output, which necessitates a rectifier to convert AC to DC. In another alternative, charging can be achieved by utilizing a dedicated fuel cell, appropriately sized, that is connected to the energy storage system 140 specifically for the purpose of charging it.

In some examples, the energy storage system 140 may comprise a rechargeable battery system, which may have significantly reduced energy storage requirements compared to a rechargeable battery system in a power generation system relying solely on fuel cells as a power source. Lower energy storage requirements also enable the possibility to use supercapacitors. Hence, the energy storage system 140 may comprise a supercapacitor. An advantage of using a supercapacitor is its reduced degradation from charge and discharge cycles, resulting in a longer lifecycle compared to conventional rechargeable battery systems, such as lithium-ion batteries.

FIGS. 1-2 also illustrate a second aspect of the disclosure relating to a hybrid power generation system 100. The hybrid power generation system 100 is configured to meet a power demand of one or more electrical loads 160, and comprises: a primary power source 120 comprising one or more fuel cells 121 and an inverter 123, wherein the one or more fuel cells are configured to convert hydrogen to electrical power, and the inverter 123 is configured to convert the DC output of the one or more fuel cells to AC; a secondary power source 130 comprising a combustion engine 131 and a generator 132, wherein the engine is configured to generate rotational power from fuel, and the generator 132 is configured to convert the rotational power into electrical power; an energy storage system 140 configured to support the primary and secondary power sources 120, 130; and a control unit 110 according to any of the examples described for the first aspect of the disclosure. It should be noted that aspects relating to the control unit 110 are also applicable to the hybrid power generation system 100.

The fuel of the combustion engine may preferably be methanol. The hybrid power generation system 10 may then further comprise a methanol reformer configured to reform methanol into hydrogen to supply the one or more fuel cells 121.This improves and streamlines fuel handling of the system, as both primary and secondary power sources can utilize the same fuel.

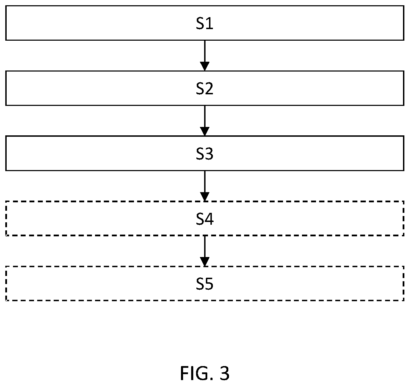

FIG. 3 illustrates a third aspect of the disclosure relating to a method for managing power sources and energy storage in a hybrid power generation system 100. It should be noted that any of the aspects relating to the control unit 110 and the hybrid power generation system 100 are also applicable to the method.

The method comprises monitoring S1 power demand of the one or more electrical loads 160, detecting S2 a spike in the power demand, and connecting S3, in response to detecting the spike in the power demand, the energy storage system 130 to support at least one of the primary and secondary power sources 120, 130. An advantage of this method is that storage requirements of the energy storage system 140 can be significantly reduced, as the energy storage system only needs to support the primary and secondary power sources during spikes in power demand and may disconnect as soon as the secondary power source 130 has reached adequate power output.

In some examples, monitoring S1 may comprise monitoring a rotational speed of the combustion engine 131 and detecting S2 a spike in power demand may comprise detecting the rotational speed dropping below a predefined threshold. This drop indicates that the combustion engine is struggling to meet power demand, thus offering an efficient and rapid method for detecting spikes in demand that exceed the capacity of the power sources 120, 130. The predefined threshold may be determined through calibration of the hybrid power generation system or by testing other systems utilizing the same type of combustion engine and energy storage system.

In some examples, the method further comprises segmenting S4 the power demand into a base load and a variable load, and controlling S5 the electrical power output of the primary and secondary power sources 120, 130 such that the primary power source 120 supplies electrical power to meet the base load, and the secondary power source 130 supplies electrical power to meet variable load. The base load reflects a stable power demand that is compatible with the steady-state operation of the one or more fuel cells 121. Typically, the base load remains constant, however, the control unit 110 may adjust it as the power demand of the one or more electrical loads changes. For instance, the control unit 110 can evaluate power demand over a designated time period to establish an appropriate base load. In one example, the base load may correspond to the minimum power demand observed during that specified interval.

In some examples, and illustrated in the example of FIG. 1, connecting S3 the energy storage system 140 to support at least one of the primary and the secondary power sources 120 may comprise connecting the energy storage system 140 in parallel to the DC output of the primary power source 120. A technical benefit may include an immediate effect of the energy storage system 140 in raising the DC output power, thereby increasing the overall output power of the hybrid power generation system. Alternatively, and illustrated in the example of FIG. 2, the combustion engine 131 further comprises an electrically assisted boosting device 234, configured to enhance engine power by supplying compressed air to the engine. Connecting S3 the energy storage system 140 to at least one of the primary and the secondary power sources 120 may then comprise connecting the energy storage system 140 to the assisted bosting device 234. As the energy storage system 140 provides power, the assisted bosting device 234 will improve the responsiveness of the secondary power source by boosting engine performance. The assisted bosting device 234 may, for example, be an e-turbocharger or an e-supercharger, which are known to swiftly enhance engine performance and efficiency.

The method may further comprise charging the energy storage system by connecting the energy storage system as a load to the primary and secondary power sources and increase the output power of the secondary power source accordingly. This may involve connecting it as a load to the DC output of the fuel cells 121, or connecting it to the AC output, which necessitates a rectifier to convert AC to DC. In another alternative, charging involves connecting a dedicated fuel cell, appropriately sized, that is connected to the energy storage system (140) specifically for the purpose of charging it.

In the following, some alternative considerations relating to the first, second, and third aspects of the disclosure will be described.

Fuel cells generate electricity using hydrogen, and combustion engines can also run on hydrogen. Alternatively, combustion engines can run on methanol, and methanol can be converted into hydrogen, allowing it to be used in a fuel cell. The integration of multiple technologies for fuel oxidation opens up new possibilities for power generation.

Fuel cells are typically combined with batteries since they are not well-suited for fast transients. The battery provides intermediate power, facilitating smoother transitions in power output from the fuel cell. While both batteries and fuel cells are expensive, fuel cells can achieve high efficiency in converting fuel to electricity. In contrast, combustion engines are generally cheaper per kilowatt, though they may be most efficient when operating at optimal conditions. They also handle transients more effectively but are typically less efficient than fuel cells during steady-state operation.

In a system designed for electrical power generation, which may include one or more engines and fuel cells running on the same fuel, the fuel cell can take on a base load role, leveraging its high efficiency. By allowing combustion engines to manage peak power demand, it is possible to downsize the required battery capacity by appropriately sizing the combustion engine and fuel cell.

In a power generation scenario, the combustion engine is usually controlled to maintain constant speed and frequency. When power demand exceeds output, engine speed drops, prompting the engine to increase power to recover speed. One method of controlling the battery is to monitor engine speed: if the speed falls below a threshold and the battery's state of charge is adequate, the battery will supply power. If the engine speed is sufficient, the battery will charge to a target state of charge.

The fuel cell could operate in an optimal range or be controlled with a floating power output. For example, monitoring engine power output allows adjustments to the fuel cell's power: if engine output remains high over time rather than through short transients, the fuel cell's output can be increased, and vice versa. This strategy aims to optimize overall system efficiency. The control strategy described here is just one of many possible implementations illustrating how to integrate a combustion engine, fuel cell, and battery effectively.

This disclosure is not limited to gensets or electricity production; it can also apply to vehicles, vessels or any other type of machinery.

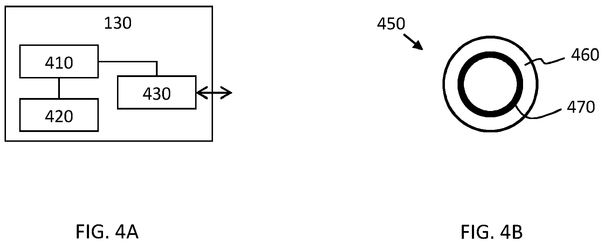

FIG. 4A schematically illustrates, in terms of a number of functional units, the components of a control unit 110 according to aspects of the discussions and methods disclosed herein. This control unit 110 may typically be comprised in the vehicle 100. Processing circuitry 410 is provided using any combination of one or more of a suitable central processing unit CPU, multiprocessor, microcontroller, digital signal processor DSP, etc., capable of executing software instructions stored in a computer program product, e.g., in the form of a storage medium 420. The processing circuitry 410 may further be provided as at least one application specific integrated circuit ASIC, or field programmable gate array FPGA.

Particularly, the processing circuitry 410 is configured to cause the control unit 110 to perform a set of operations, or steps, such as the methods discussed in connection to FIG. 3. For example, the storage medium 420 may store the set of operations, and the processing circuitry 410 may be configured to retrieve the set of operations from the storage medium 420 to cause the control unit 110 to perform the set of operations. The set of operations may be provided as a set of executable instructions. Thus, the processing circuitry 410 is thereby arranged to execute methods as herein disclosed.

The storage medium 420 may also comprise persistent storage, which, for example, can be any single one or combination of magnetic memory, optical memory, solid state memory or even remotely mounted memory.

The control unit 110 may further comprise an interface 430 for communications with at least one external system, such as the primary and secondary power sources (120, 130), the energy storage system (140), and various sensors, e.g., the rotational speed sensor

(133). As such the interface 430 may comprise one or more transmitters and receivers, comprising analogue and digital components and a suitable number of ports for wireline or wireless communication.

The processing circuitry 410 controls the general operation of the control unit 110, e.g., by sending data and control signals to the interface 430 and the storage medium 420, by receiving data and reports from the interface 430, and by retrieving data and instructions from the storage medium 420. Other components, as well as the related functionality, of the control node are omitted in order not to obscure the concepts presented herein.

FIG. 4B shows an example of a computer program product. A computer readable medium 460 carrying a computer program 470 comprising program code means for performing the steps of aforementioned method when said program product is run on a computer or on processing circuitry 410 of a control unit 110.

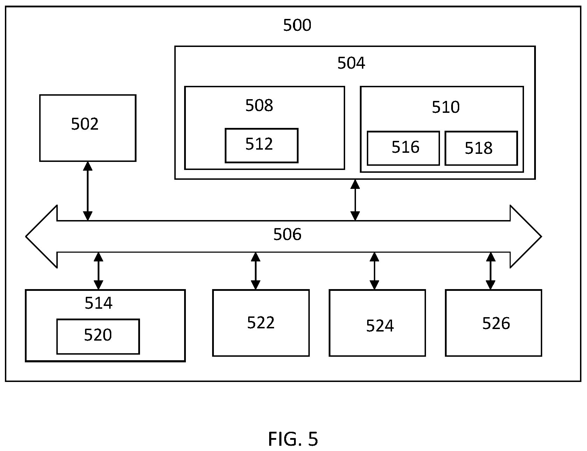

FIG. 5 is a schematic diagram of a computer system 500 for implementing examples disclosed herein. The computer system 500 is adapted to execute instructions from a computer-readable medium to perform these and/or any of the functions or processing described herein. The computer system 500 may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system 500 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 500 may comprise at least one computing device or electronic device capable of including firmware, hardware, and/or executing software instructions to implement the functionality described herein. The computer system 500 may include processing circuitry 502 (e.g., processing circuitry including one or more processor devices or control units), a memory 504, and a system bus 506. The computer system 500 may include at least one computing device having the processing circuitry 502. The system bus 506 provides an interface for system components including, but not limited to, the memory 504 and the processing circuitry 502. The processing circuitry 502 may include any number of hardware components for conducting data or signal processing or for executing computer code stored in memory 504. The processing circuitry 502 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 502 may further include computer executable code that controls operation of the programmable device.

The system bus 506 may be any of several types of bus structures that may further interconnect to a memory bus (with or without a memory controller), a peripheral bus, and/or a local bus using any of a variety of bus architectures. The memory 504 may be one or more devices for storing data and/or computer code for completing or facilitating methods described herein. The memory 504 may include database components, object code components, script components, or other types of information structure for supporting the various activities herein. Any distributed or local memory device may be utilized with the systems and methods of this description. The memory 504 may be communicably connected to the processing circuitry 502 (e.g., via a circuit or any other wired, wireless, or network connection) and may include computer code for executing one or more processes described herein. The memory 504 may include non-volatile memory 508 (e.g., read-only memory (ROM), erasable programmable read-only memory (EPROM), electrically erasable programmable read-only memory (EEPROM), etc.), and volatile memory 510 (e.g., random-access memory (RAM)), or any other medium which can be used to carry or store desired program code in the form of machine-executable instructions or data structures and which can be accessed by a computer or other machine with processing circuitry 502. A basic input/output system (BIOS) 512 may be stored in the non-volatile memory 508 and can include the basic routines that help to transfer information between elements within the computer system 500.

The computer system 500 may further include or be coupled to a non-transitory computer-readable storage medium such as the storage device 514, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 514 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 514 and/or in the volatile memory 510, which may include an operating system 516 and/or one or more program modules 518. All or a portion of the examples disclosed herein may be implemented as a computer program 520 stored on a transitory or non-transitory computer-usable or computer-readable storage medium (e.g., single medium or multiple media), such as the storage device 514, which includes complex programming instructions (e.g., complex computer-readable program code) to cause the processing circuitry 502 to carry out actions described herein. Thus, the computer-readable program code of the computer program 520 can comprise software instructions for implementing the functionality of the examples described herein when executed by the processing circuitry 502. In some examples, the storage device 514 may be a computer program product (e.g., readable storage medium) storing the computer program 520 thereon, where at least a portion of a computer program 520 may be loadable (e.g., into a processor) for implementing the functionality of the examples described herein when executed by the processing circuitry 502. The processing circuitry 502 may serve as a controller or control system for the computer system 500 that is to implement the functionality described herein.

The computer system 500 may include an input device interface 522 configured to receive input and selections to be communicated to the computer system 500 when executing instructions, such as from a keyboard, mouse, touch-sensitive surface, etc. Such input devices may be connected to the processing circuitry 502 through the input device
interface 522 coupled to the system bus 506 but can be connected through other interfaces, such as a parallel port, an Institute of Electrical and Electronic Engineers (IEEE) 1394 serial port, a Universal Serial Bus (USB) port, an IR interface, and the like. The computer system 500 may include an output device interface 524 configured to forward output, such as to a display, a video display unit (e.g., a liquid crystal display (LCD) or a cathode ray tube (CRT)). The computer system 500 may include a communications interface 526 suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Example 1: A control unit 110 for managing power sources and energy storage in a hybrid power generation system 100, wherein the hybrid power generation system 100 is configured to meet a power demand of one or more electrical loads 160, and comprises: a primary power source 120 comprising one or more fuel cells 121 and an inverter 123, wherein the one or more fuel cells are configured to convert hydrogen to electrical power, and the inverter 123 is configured to convert the DC output of the one or more fuel cells to AC; a secondary power source 130 comprising a combustion engine 131 and a generator 132, wherein the engine is configured to generate rotational power from fuel, and the generator 132 is configured to convert the rotational power into electrical power; and; an energy storage system 140 configured to support the primary and secondary power sources 120, 130; and wherein the control unit 110 is configured to monitor the power demand of the one or more electrical loads 160, and upon detecting a spike in the power demand, connect the energy storage system 140 to support at least one of the primary and secondary power sources 120, 130.

Example 2: The control unit 110 of example 1, wherein the control unit 110 is configured to segment the power demand into a base load and a variable load, and control the electrical power output of the primary and secondary power sources 120, 130 such that: the primary power source 120 supplies electrical power to meet the base load, and the secondary power source 130 supplies electrical power to meet variable load.

Example 3: The control unit of example 2, wherein the control unit 110 is configured to adjust the base load by evaluating the power demand over a specified time interval.

Example 4: The control unit of any of examples 1-3, wherein monitoring power demand comprises monitoring rotational speed of the combustion engine 131 and wherein detecting a spike in power demand comprises detecting the rotational speed dropping below a predefined threshold.

Example 5: The control unit of any of examples 1-4, wherein connecting the energy storage system 140 to the primary power source 120 comprises connecting the energy storage system 140 in parallel to the DC output of the primary power source 120.

Example 6: The control unit of any of examples 1-5, wherein the combustion engine 131 further comprises an electrically assisted boosting device 234, configured to enhance engine power by supplying compressed air to the engine, and wherein connecting the energy storage system 140 to the secondary power source comprises connecting the energy storage system 140 to the assisted bosting device 234.

Example 7: The control unit of any of examples 1-6, wherein the control unit 110 is further configured to control the charging of the energy storage system 140 by connecting the energy storage system 140 as a load to the primary and secondary power sources 120, 130 and increase the output power of the secondary power source accordingly.

Example 8: The control unit of any of examples 1-7, wherein the energy storage system 140 comprises a supercapacitor.

Example 9: A hybrid power generation system 100 configured to meet a power demand of one or more electrical loads 160, wherein the hybrid power generation system 100 comprises: a primary power source 120 comprising one or more fuel cells 121 and an inverter 123, wherein the one or more fuel cells are configured to convert hydrogen to electrical power, and the inverter 123 is configured to convert the DC output of the one or more fuel cells to AC; a secondary power source 130 comprising a combustion engine 131 and a generator 132, wherein the engine is configured to generate rotational power from fuel, and the generator 132 is configured to convert the rotational power into electrical power; an energy storage system 140 configured to support the primary and secondary power sources 120, 130; and a control unit 110 according to any of examples 1-8.

Example 10: The hybrid power generation system 100 of example 10, wherein the fuel of the combustion engine is methanol and wherein the hybrid power generation system further comprises a methanol reformer configured to reform methanol into hydrogen to supply the fuel cell system 120.

Example 11: A method for monitoring and managing power supply sources and energy storage in a hybrid power generation system 100, wherein the hybrid power generation system 100 is configured to meet a power demand of one or more electrical loads 160, and comprises: a primary power source 120 comprising one or more fuel cells 121 and an inverter 123, wherein the one or more fuel cells are configured to convert hydrogen to electrical power, and the inverter 123 is configured to convert the DC output of the one or more fuel cells to AC; a secondary power source 130 comprising a combustion engine 131 and a generator 132, wherein the engine is configured to generate rotational power from fuel, and the generator 132 is configured to convert the rotational power into electrical power; and an energy storage system 140 configured to support the primary and secondary power sources 120, 130; and wherein the method comprises: monitoring S1 power demand of the one or more electrical loads 160, detecting S2 a spike in the power demand, and connecting S3, in response to detecting the spike in power demand, the energy storage system 140 to support at least one of the primary or secondary power sources 120, 130.

Example 12: The method of example 11, wherein the method further comprises segmenting S4 the power demand into a base load and a variable load, and controlling S5 the electrical power output of the primary and secondary power sources 120, 130 such that the primary power source 120 supplies electrical power to meet the base load, and the secondary power source 130 supplies electrical power to meet variable load.

Example 13: The method of example 12, wherein segmenting S4 further comprises adjusting the base load by evaluating the power demand over a specified time interval.

Example 14: The method of any of examples 11-13, wherein monitoring S1 comprises monitoring rotational speed of the combustion engine 131 and wherein detecting S2 the spike in the power demand comprises detecting the rotational speed dropping below a predefined threshold.

Example 15: The method of any of examples 11-14, wherein connecting S3 the energy storage system 140 to the primary power source 120 comprises connecting the energy storage system 140 in parallel to the DC output of the primary power source 120.

Example 16: The method of any of examples 11-15, wherein the combustion engine 131 comprises an electrically assisted boosting device 234, configured to enhance engine power by supplying compressed air to the engine, and wherein connecting S3 to energy storage system 140 to the secondary power source comprises connecting the energy storage system 140 to the assisted bosting device 234.

Example 17: The method of any of examples 11-16, wherein the method further comprises charging the energy storage system 140 by connecting the energy storage system as a load to the primary and secondary power sources and increase the output power of the secondary power source accordingly.

Example 18: The method of any of examples 11-17, wherein the energy storage system 140 comprises a supercapacitor.

Example 19: A computer program product comprising program code for performing, when executed by the processing circuitry, the method of any of examples 11-18.

Example 20: A non-transitory computer-readable storage medium comprising instructions, which when executed by the processing circuitry, cause the processing circuitry to perform the method of any of examples 11-18.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A control unit (110) for managing power sources and energy storage in a hybrid power generation system (100), wherein the hybrid power generation system (100) is configured to meet a power demand of one or more electrical loads (160), and comprises:
a primary power source (120) comprising one or more fuel cells (121) and an inverter (123), wherein the one or more fuel cells are configured to convert hydrogen to electrical power, and the inverter (123) is configured to convert the DC output of the one or more fuel cells to AC;
a secondary power source (130) comprising a combustion engine (131) and a generator (132), wherein the engine is configured to generate rotational power from fuel, and the generator (132) is configured to convert the rotational power into electrical power; and
an energy storage system (140) configured to support the primary and secondary power sources (120, 130), and wherein
the control unit (110) is configured to monitor the power demand of the one or more electrical loads (160), and upon detecting a spike in the power demand, connect the energy storage system (140) to support at least one of the primary and secondary power sources (120, 130).

2. The control unit (110) of claim 1, wherein the control unit (110) is configured to segment the power demand into a base load and a variable load, and control the electrical power output of the primary and secondary power sources (120, 130) such that:
the primary power source (120) supplies electrical power to meet the base load, and
the secondary power source (130) supplies electrical power to meet the variable load.

3. The control unit of claim 2, wherein the control unit (110) is configured to adjust the base load by evaluating the power demand over a specified time interval.

4. The control unit of any of claims 1-3, wherein monitoring power demand comprises monitoring rotational speed of the combustion engine (131) and wherein detecting a spike in power demand comprises detecting the rotational speed dropping below a predefined threshold.

5. The control unit of any of claims 1-4, wherein connecting the energy storage system (140) to the primary power source (120) comprises connecting the energy storage system (140) in parallel to the DC output of the primary power source (120).

6. The control unit of any of claims 1-5, wherein the combustion engine (131) further comprises an electrically assisted boosting device (234), configured to enhance engine power by supplying compressed air to the engine, and wherein connecting the energy storage system (140) to the secondary power source comprises connecting the energy storage system (140) to the assisted bosting device (234).

7. A hybrid power generation system (100) configured to meet a power demand of one or more electrical loads (160), wherein the hybrid power generation system (100) comprises: a primary power source (120) comprising one or more fuel cells (121) and an inverter (123), wherein the one or more fuel cells are configured to convert hydrogen to electrical power, and the inverter (123) is configured to convert the DC output of the one or more fuel cells to AC; a secondary power source (130) comprising a combustion engine (131) and a generator (132), wherein the engine is configured to generate rotational power from fuel, and the generator (132) is configured to convert the rotational power into electrical power; an energy storage system (140) configured to support the primary and secondary power sources (120, 130); and a control unit (110) according to any of claims 1-8.

8. The hybrid power generation system (100) of claim 7, wherein the fuel of the combustion engine is methanol and wherein the hybrid power generation system further comprises a methanol reformer configured to reform methanol into hydrogen to supply the fuel cell system (120).

9. A method for monitoring and managing power supply sources and energy storage in a hybrid power generation system (100), wherein the hybrid power generation system (100) is configured to meet a power demand of one or more electrical loads (160), and comprises:
a primary power source (120) comprising one or more fuel cells (121) and an inverter (123), wherein the one or more fuel cells are configured to convert hydrogen to electrical power, and the inverter (123) is configured to convert the DC output of the one or more fuel cells to AC; a secondary power source (130) comprising a combustion engine (131) and a generator (132), wherein the engine is configured to generate rotational power from fuel, and the generator (132) is configured to convert the rotational power into electrical power;
and an energy storage system (140) configured to support the primary and secondary power sources (120, 130); and
wherein the method comprises:
monitoring (S1) power demand of the one or more electrical loads (160),
detecting (S2) a spike in the power demand, and
connecting (S3), in response to detecting the spike in power demand, the energy storage system (140) to support at least one of the primary and secondary power sources (120, 130).

10. The method of claim 9, wherein the method further comprises
segmenting (S4) the power demand into a base load and a variable load, and
controlling (S5) the electrical power output of the primary and secondary power sources (120, 130) such that the primary power source (120) supplies electrical power to meet the base load, and the secondary power source (130) supplies electrical power to meet variable load.

11. The method of claim 10, wherein segmenting (S4) further comprises adjusting the base load by evaluating the power demand over a specified time interval.

12. The method of any of claims 9-11, wherein monitoring (S1) comprises monitoring rotational speed of the combustion engine (131) and wherein detecting (S2) the spike in the power demand comprises detecting the rotational speed dropping below a predefined threshold.

13. The method of any of claims 9-12, wherein connecting (S3) the energy storage system (140) to the primary power source (120) comprises connecting the energy storage system (140) in parallel to the DC output of the primary power source (120).

14. The method of any of claims 9-13, wherein the combustion engine (131) comprises an electrically assisted boosting device (234), configured to enhance engine power by supplying compressed air to the engine, and wherein connecting (S3) to energy storage system (140) to the secondary power source comprises connecting the energy storage system (140) to the assisted bosting device (234).

15. A non-transitory computer-readable storage medium comprising instructions, which when executed by the processing circuitry, cause the processing circuitry to perform the method of any of claims 11-18.
